# EUROPÄISCHE PATENTSCHRIFT

(11) **EP 2 483 948 B1**
(45) Veröffentlichungstag und Bekanntmachung des Hinweises auf die Patenterteilung: **02.07.2014**
(21) Anmeldenummer: 10757049.1
(22) Anmeldetag: 22.09.2010
(51) Int. Cl.: H01M 2/10, H01M 2/20, H01M 10/46, H01M 10/04

(54) **BATTERIEAUFNAHMEEINHEIT**
BATTERY HOLDING UNIT
UNITÉ DE LOGEMENT DE BATTERIE

(30) Priorität: 02.10.2009 DE 102009048147
(43) Veröffentlichungstag der Anmeldung: 08.08.2012
(73) Patentinhaber: Li-Tec Battery GmbH, 01917 Kamenz (DE)
(72) Erfinder: SCHAEFER, Tim, 99762 Niedersachswerfen (DE); GUTSCH, Andreas, 59348 Luedinghausen (DE)
(74) Vertreter: Wallinger, Michael
(86) Internationale Anmeldenummer: PCT/EP2010/005804
(87) Internationale Veröffentlichungsnummer: WO 2011/038854

(56) Entgegenhaltungen:
- EP-A2- 1 465 296
- CH-A5- 675 935
- DE-A1- 4 110 984
- DE-A1- 4 242 659
- DE-C- 432 160
- DE-C1- 4 142 291
- US-A- 3 930 552
- US-A- 5 900 715
- US-A1- 2008 053 716

## Beschreibung

Die Erfindung betrifft eine Batterieaufnahmeeinheit zur Aufnahme zumindest einer elektrochemischen Zelle.

Derartige Batterieaufnahmeeinheiten finden insbesondere Anwendung in stationären Batteriestationen. Regenerative Energien wie beispielsweise die Windenergie oder die Solarenergie, weisen den Nachteil der schwankenden Leistungsabgabe auf. Bei entsprechenden Witterungsbedingungen können Windkraftanlagen oder Solarstromanlagen eine hohe Leistung abgeben, während bei entsprechender Änderung der Witterungslage die Leistungsabgabe innerhalb kurzer Zeit auf einen sehr geringen Wert absinken kann. Derartige Schwankungen machen es notwendig, Energie, welche bei günstigen Witterungsbedingungen umgesetzt wird, zu speichern. Eine derartige Speicherung kann in Batteriestationen vorgenommen werden, in der eine Vielzahl von elektrochemischen Zellen bereitgestellt wird. Wenn die Windkraftanlagen oder die Solaranlagen wenig Leistung zur Verfügung stellen, können die Batteriestationen die verminderte Leistungsabgabe ausgleichen.

Derartige Batterieaufnahmeeinheiten können aber auch zur Anwendung bei Batterieladestationen und Formierungsanlagen kommen.

Die US 4,994,940 zeigt einen modularen Schrank mit einer Vielzahl von Batteriemodulen. Einzelne Schrankmodule können von einem Benutzer herausgezogen werden, sodass ein Zugang zu den Batteriemodulen möglich ist. Stromableiter der Batterien sind der Öffnung des Schrankmoduls zugewandt und mittels Kabeln oder Steckverbindungen kontaktiert.

Die US 2001/031392 A1 zeigt einen Befestigungsrahmen für Batteriemodule, der eine Mehrzahl von Öffnungen zum Einsetzen von Batteriemodulen aufweist. Eine federbeaufschlagte Stromableiteraufnahme kann einen zylindrischen Stromableiter einrastend kontaktieren.

Die WO 2003/065483 A2 zeigt einen Batterieaufnahmerahmen zur Aufnahme mehrerer übereinander gestapelter Batterien. Die Batterien sind mit einer Seitenplatte verbunden. Die Batterien haben an vertikalen Seitenflächen Rippen, die in Kerben an den Seitenplatten einführbar sind. Die Seitenplatten umfassen vertikale Kanten, an die elektrische Anschlusselemente angebracht sind. Die Anschlusselemente erstrecken sich jeweils von einem oberen Abschnitt einer der Batterien zu einem unteren Abschnitt der darüber angeordneten Batterie, sodass einzelne Batterien miteinander elektrisch verbunden werden können.

Die DE 44 11 842 A1 zeigt eine Batterieladestation, welche einen senkrechten Förderer mit gondelartigen Körben umfasst. In den Körben können Fahrzeugbatterien aufgenommen und geladen werden. Stromabnehmer der Körbe sind in verschiebbarem Kontakt mit Stromschienen und mittels Kabeln an den Batterien angeschlossen.

DE 4 242 659 A1 offenbart eine Battereaufnahmelinheit umfassend Rangiemittel in Form eineR Drelscheibe.

Es ist Aufgabe der vorliegenden Erfindung eine verbesserte Batterieaufnahmeeinheit zur Aufnahme zumindest einer elektrochemischen Zelle bereitzustellen.

Diese Aufgabe wird gelöst durch eine Batterieaufnahmeeinheit gemäß Ansprunch 1.

Die in Ansprunch genannte Kontaktierungsfläche kann vorzugsweise unmittelbar mit einem Stromableiter in Anlage bringbar sein; alternativ kann die Kontaktierungsfläche auch mittelbar mit einem Stromableiter der elektrochemischen Zelle in Anlage bringbar sein.

Im Sinne der Erfindung ist unter einer elektrochemischen Zelle eine Vorrichtung zu verstehen, welche auch zur Speicherung chemischer Energie und zur Abgabe elektrischer Energie dient. Dazu kann die erfindungsgemäße elektrochemische Zelle wenigstens über einen Elektrodenstapel oder einen Elektrodenwickel verfügen, der mittels einer Umhüllung gegenüber der Umgebung weitgehend gas- und flüssigkeitsdicht abgegrenzt ist. Auch kann die elektrochemische Zelle ausgestaltet sein, elektrische Energie beim Laden aufzunehmen. Man spricht dann auch von einer Sekundärzelle oder einem Akkumulator.

Mit einem Stromableiter ist dabei ein Element gemeint, welches aus einem stromleitenden Material hergestellt ist. Es dient zur Leitung von Strom zwischen zwei geometrisch voneinander getrennten Punkten. Im vorliegenden Fall kann ein Stromableiter mit einem Elektrodenstapel verbunden sein. Insbesondere ist der Stromableiter dabei mit allen gleichartigen Elektroden eines Elektrodenstapels verbunden, d.h. entweder mit den Kathoden oder mit den Anoden. Es ist selbstverständüch, dass ein Stromableiter nicht mit den Kathoden und Anoden eines Elektrodenstapels gleichzeitig verbunden ist, da dies zu einem Kurzschluss führen würde. Jedoch kann ein Stromableiter mit unterschiedlichen Elektroden von unterschiedlichen Elektrodenstapeln verbunden sein, so z.B. bei einer Reihenschaltung der beiden Elektrodenstapel. Wenigstens ein Stromableiter erstreckt sich vorzugsweise aus einer Umhüllung einer elektrochemischen Zelle und kann dabei zum Anschließen der Batteriezellen nach außen dienen. Der Stromableiter kann mit einer oder mehreren Elektroden einstückig ausgebildet sein oder grundsätzlich mehrstückig ausgebildet sein. Eine Abgrenzung zwischen Stromableiter und Elektrode kann darin gesehen werden, dass der Stromableiter insbesondere nicht mit aktivem Elektrodenmaterial beschichtet ist.

Die Kontaktierungseinheit dient dabei zum Herstellen eines elektrischen Kontaktes zwischen zumindest Teilen der Batterieaufnahmeeinheit und zumindest Teilen der aufzunehmenden elektrochemischen Zelle. Die Kontaktierungsfläche, welche Bestandteil der Kontaktierungseinheit ist, besteht dabei aus einem stromleitenden Werkstoff, insbesondere einem metallischen Werkstoff, und ist dazu vorgesehen, mit einer anderen Komponente, insbesondere dem Stromableiter, in unmittelbaren Kontakt zu geraten. Zwischen dem Stromableiter und der Kontaktierungsfläche kann aber auch ein weiteres Bauteil angeordnet werden, sodass der elektrische Kontakt zwischen der Kontaktierungsfläche und dem Stromableiter mittelbar hergestellt werden kann. Die Kontaktierungseinheit kann neben der Kontaktierungsfläche weitere Komponenten aufweisen, die nicht zwangsläufig stromleitende Eigenschaften besitzen müssen.

Unter einer Kontaktierungsschiene ist dabei vorzugsweise eine Komponente zu verstehen, welche über eine gewisse axiale Erstreckung einen im Wesentlichen konstant bleibenden Querschnitt aufweist. In einer Haupterstreckungsrichtung, nämlich im vorliegenden Fall einer Längsachse, die vorzugsweise einer Einführrichtung entspricht, weist die Kontaktierungsschiene insbesondere eine um ein Vielfaches größere Erstreckung als in anderen Richtungen auf. Die Kontaktierungsschiene kann vorzugsweise aus einem Strangpressprofil hergestellt sein. Ein Strangpressprofil kann dadurch hergestellt werden, dass ein Pressling durch eine Matrize gedrückt wird. Die äußere Form in Profilstrangrichtung wird dabei durch die Matrize bestimmt, sodass der Querschnitt im Wesentlichen konstant bleibt. Die Kontaktierungsfläche kann integral mit der Kontaktierungsschiene ausgebildet sein; dann ist die Kontaktierungsschiene aus einem stromleitenden Material hergestellt. Alternativ kann die Kontaktierungsfläche auch ein separates Bauteil sein, welches an der Kontaktierungsschiene angeordnet ist. Dabei kann die Kontaktierungsfläche insbesondere stoffschlüssig oder kraftschlüssig mit der Kontaktierungsschiene verbunden sein. Vorzugsweise weist die Kontaktierungsschiene dabei einen im Wesentlichen geradlinigen Verlauf auf. Der geradlinige Verlauf entspricht dabei vorzugsweise im Wesentlichen der Längsachse der Kontaktierungsschiene.

Die Ablagefläche kann zur Aufnahme einer Gewichtskraftkomponente der elektrochemischen Zelle vorgesehen und/oder ausgebildet sein. Die Ablagefläche kann an einer Kontaktierungsschiene angeordnet sein.

Die erfindungsgemäße Batterieaufnahmeeinheit weist den Vorteil auf, dass das Bestücken und Kontaktieren von elektrochemischen Zellen in wenigen Verfahrensschritten geschehen kann. Nach einem Platzieren der elektrochemischen Zellen an deren definierten Lagerpositionen können diese bereits korrekt kontaktiert sein. Die Batterieaufnahmeeinheit kann dabei ermöglichen, dass die elektrochemischen Zellen an unterschiedlichen Position einfach zu kontaktieren sind. Ferner können unterschiedliche Formate von elektrochemischen Zellen in derartigen Batterieaufnahmeeinheiten verwendet werden.

In einer bevorzugten Ausgestaltung der Erfindung können Federmittel vorgesehen sein, die die Kontaktierungsfläche beaufschlagen. Diese Beaufschlagung kann mittelbar und/oder unmittelbar erfolgen. Bei einer mittelbaren Beaufschlagung können die Federmittel vorzugsweise zunächst die Kontaktierungsschiene beaufschlagen, durch welche wiederum die Kontaktierungsfläche beaufschlagt wird. Die Federmittel können aber auch zwischen der Kontaktierungsschiene und der Kontaktierungsfläche angeordnet sein, sodass die Federmittel die Kontaktierungsfläche gegenüber der Kontaktierungsschiene beaufschlagen. Eine Beaufschlagung kann grundsätzlich in Richtung zur Ablagefläche erfolgen, d.h. insbesondere, dass die Beaufschlagung in einer Richtung senkrecht zu einer Ebene der Ablagefläche erfolgen kann. Dies ist insbesondere dann von Vorteil, wenn die Kontaktierung zwischen Kontaktierungsfläche und Stromableiter entlang von Flächen erfolgt, welche im Wesentlichen parallel zur Ablagefläche ausgerichtet sind. Alternativ kann die Beaufschlagung auch in einer Richtung erfolgen, welche parallel zur Ebene der Ablagefläche ausgerichtet ist. Dies ist insbesondere dann von Vorteil, wenn die Kontaktierungsflächen und die Stromableiter an Flächen aneinander in Anlage sind, welche senkrecht zur Ebene der Ablagefläche ausgerichtet sind.

Insbesondere wenn die Federmittel die Kontaktierungsfläche in einer im Wesentlichen quer zur Ablagefläche verlaufenden Richtung beaufschlagen, kann die elektrochemische Zelle derart kraftschlüssig in der Batterieaufnahmeeinheit fixiert sein, sodass weitere Befestigungsmöglichkeiten entfallen können. Hierzu können die Federmittel derart dimensioniert sein, dass die elektrochemischen Zellen derart sicher in ihren definierten Positionen gehalten sind, dass ein unbeabsichtigtes Verrutschen nicht möglich ist. Bei einem manuellen oder automatisierten beabsichtigten Lösen der elektrochemischen Zelle aus deren definierten Position kann eine Betätigungskraft die durch Haftreibung bedingte Haltekraft überwinden. Ein Stromableiter kann vorzugsweise auf einer Ablagefläche aufliegen.

Vorzugsweise weist die Kontaktierungsschiene entlang einer Längsachse der Kontaktierungsschiene eine größere Erstreckung auf als eine einzusetzende Elektrochemische Zelle. Vorzugsweise ist die Kontaktierungsschiene dabei entlang der Längsachse um ein Vielfaches größer als eine einzusetzende elektrochemische Zelle in dieser Richtung. Hierdurch können mehrere elektrochemische Zellen hintereinander entlang der Kontaktierungsschiene angeordnet werden. An einer Kontaktierungsschiene können somit vorzugsweise mehrere elektrochemische Zellen kontaktiert werden.

Vorzugsweise ist die Kontaktierungsschiene beabstandet zur Ablagefläche angeordnet. Dabei kann sich vorzugsweise ein Aufnahmeraum zwischen der Kontaktierungsschiene und der Ablagefläche ergeben, in dem die elektrochemische Zelle aufgenommen werden kann. Die elektrochemische Zelle kann zwischen der Kontaktierungseinheit und der Ablagefläche aufgenommen werden, insbesondere kraftschlüssig aufgenommen werden. Die Kontaktierungsschiene kann an einer Ablagefläche einer benachbarten Batterieaufnahmeeinheit angebracht sein. Die Kontaktierungsschiene kann sich von einer Ablagefläche einer benachbarten Batterieaufnahmeeinheit in Richtung zur Ablagefläche hin erstrecken. Es kann eine separate Kontaktierungsschiene in der Ablagefläche ausgebildet sein.

Es können grundsätzlich mehrere Kontaktierungsschienen vorgesehen sein, an welcher jeweils eine Kontaktierungsfläche angeordnet ist. Es können aber auch mehrere Kontaktierungsschienen vorgesehen sein, an der jeweils eine Kontaktierungsfläche angeordnet ist. Alternativ oder in Kombination hierzu können einzelne Kontaktierungsschienen mehrere separate Kontaktierungsflächen aufweisen. Für alle genannten Möglichkeiten gilt, dass verschiedene Kontaktierungsflächen parallel zueinander ausgerichtet sein können.

In einer bevorzugten Ausgestaltung der Erfindung bildet eine Kontaktierungsschiene die Ablagefläche. Dabei sind zumindest zwei separate Kontaktierungsschienen vorgesehen, zwischen welchen vorzugsweise die elektrochemische Zelle angeordnet sein kann. Dabei können zwei Stromableiter der elektrochemischen Zelle mit Kontaktierungsflächen der beiden Kontaktierungsschienen in Anlage geraten. Eine der Kontaktierungsschienen kann vertikal unten angeordnet sein und dabei vorzugsweise die Ablagefläche bilden, welche im Wesentlichen auch die Gewichtskraft der elektrochemischen Zelle aufnehmen kann. Die andere Kontaktierungsschiene kann oben angeordnet sein, und neben den Kontaktierungsfunktionen auch ein seitliches Führen der elektrochemischen Zelle bewirken.

Vorzugsweise ist die Ablagefläche im Wesentlichen in einer Ebene angeordnet. Die Kontaktierungsschiene ist dabei vorzugsweise im Wesentlichen parallel zu dieser Ebene ausgerichtet. Die Ebene kann horizontal ausgerichtet sein, sodass die Gewichtskraft der elektrochemischen Zelle vollständig von der Ablagefläche abgestützt werden kann. Die Ablagefläche kann dabei durch eine Platte gebildet sein, über die die elektrochemische Zelle verschoben werden kann. Die Ablagefläche kann dabei ortsfest innerhalb der Batterieaufnahmeeinheit gehalten sein. Alternativ hierzu kann die Ablagefläche auch verschiebbar gegenüber anderen Komponenten der Batterieaufnahmeeinheit gehalten sein.

Vorzugsweise weist zumindest eine Kontaktierungsfläche Mittel zum seitlichen Führen der elektrochemischen Zelle auf, insbesondere zum seitlichen Führen von Stromableitern der elektrochemischen Zelle auf. Derartige Mittel können durch seitliche Wandungen gebildet sein. Die seitlichen Wandungen können sich im Wesentlichen parallel zu einer Längsachse der Führungsschiene erstrecken. Unter einem seitlichen Führen kann dabei ein derartiges Führen verstanden werden, welches ein Entweichen der elektrochemischen Zelle oder Teilen davon quer zur Längsachse der Kontaktierungsschiene verhindern kann. Zumindest eine der Kontaktierungsschienen kann einen U-förmigen Aufnahmeraum zum Aufnehmen eines Stromableiters und/oder sonstigen Teilen der elektrochemischen Zelle aufweisen.

Erfindungsgemäß weist eine Kontaktierungsschiene mehrere Kontaktierungsflächenabschnitte auf, wobei einzelne Kontaktierungsflächenabschnitte gegeneinander elektrisch isoliert sind. Diese Kontaktierungsflächenabschnitte sind entlang einer gemeinsamen Längsachse ausgerichtet, also insbesondere hintereinander fluchtend. Die Kontaktierungsflächenabschnitte können durch eine gemeinsame Kontaktierungsfläche gebildet sein, wobei vorzugsweise isolierende Unterbrechungen der Kontaktierungsfläche zwischen einzelnen Kontaktierungsflächenabschnitten vorgesehen sein können. Hierdurch kann sich insgesamt eine segmentierte Ausbildung der Kontaktierungsflächen ergeben. Dadurch können entlang einer Längsachse Kontaktierungsflächenabschnitte mit unterschiedlichen elektrischen Polungen ausgebildet werden. Diese unterschiedlichen Polungen können dabei zu unterschiedlichen Verschaltungen der Elektrochemischen Zellen herangezogen werden. Eine Veränderung der Verschaltung kann während des Betriebes bei gleichbleibender mechanischer Anordnung der elektrochemischen Zellen erfolgen.

Vorzugsweise ist die Ablagefläche verschiebbar innerhalb der Batterieaufnahmeeinheit gehalten. Die Ablagefläche kann insbesondere verschiebbar gegenüber einer Längsachse der Kontaktierungsschiene und/oder einer Einschubrichtung der elektrochemischen Zellen gehalten sein. Die Ablagefläche kann vorzugsweise über eine Länge verschiebbar sein, die im Wesentlichen mehr als 50%, insbesondere mehr als 75%, insbesondere mehr als 90% der Länge der Kontaktierungsschiene entspricht. Die Ablagefläche kann dabei, vorzugsweise wie eine Schublade, aus einem Gehäuse der Batterieaufnahmeeinheit herausziehbar sein. Dies hat den Vorteil, dass aufzunehmende elektrochemische Zellen zunächst auf die Ablagefläche gelegt werden können und anschließend in einem gemeinsamen Verfahrensschritt entlang der Kontaktierungsschiene verschoben werden können.

Erfindungsgemäß weist die Batterieaufnahmeeinheit Rangiermittel auf. Unter Rangiermitteln sind dabei insbesondere derartige Mittel zu verstehen, die ein Umsetzen von elektrochemischen Zellen von einer Kontaktierungsschiene hin zu einer anderen Kontaktierungsschiene oder von einem Kontaktierungsschienenabschnitt zu einem anderen Kontaktierungsschienenabschnitt ermöglichen oder zumindest unterstützen, insbesondere wenn die Kontaktierungsschienen oder die Kontaktierungsschienenabschnitt winklig und/oder seitlich versetzt zueinander angeordnet sind. Derartige Rangiermittel umfassen erfindungsgemäß eine Drehscheibe. Die Drehscheibe ist ferner mittig gegenüber einer Mehrzahl von sternförmig zueinander angeordneten Kontaktierungsschienenabschnitten angeordnet. Die Drehscheibe kann dabei zum revolverartigen Umsetzen von elektrochemischen Zellen auf einzelne der sternförmig zueinander angeordneten Kontaktierungsschienenabschnitte dienen. Vorzugsweise ist die Drehscheibe kreisförmig gestaltet und drehbar insbesondere gegenüber einer Bodenplatte der Batterieaufnahmeeinheit gehalten. Vorzugsweise weist die Drehscheibe einen Kontaktierungsschienenabschnitt auf, welcher weiter vorzugsweise durch einen Mittelpunkt der Drehscheibe verläuft. Um eine möglichst platzsparende Anordnung von elektrochemischen Zellen zu ermöglichen, kann die sternförmige Anordnung der sternförmig zueinander angeordneten Kontaktierungsschienenabschnitte sich nur auf einen Bereich in unmittelbarer Nähe der Drehscheibe beschränken. Weiter zur Drehscheibe beabstandete Kontaktierungsschienenabschnitte müssen nicht mehr zwangsläufig sternförmig zueinander ausgerichtet sein. Vorzugsweise weist die Batterieaufnahmeeinheit auf einer der Bodenplatte gegenüber liegenden Deckenplatte eine im Wesentlichen identische Anordnung von sternförmig zueinander angeordneten Kontaktierungsschienenabschnitten und der Drehscheibe auf.

Durch die Anordnung der Kontaktierungsschienenabschnitte mit den Rangiermitteln kann ein Rangieren von elektrochemischen Zellen innerhalb der Batterieaufnahmeeinheit ermöglicht werden. Die Kontaktierungsschienenabschnitte können in unterschiedlichster Weise ausgestaltet sein und im Querschnitt insbesondere entsprechend den bereits vorgenannten möglichen Ausgestaltungen der Kontaktierungsschienen und der Kontaktierungsflächen ausgestaltet sein.

Die Erfindung betrifft ferner ein Verfahren zum Einlegen von elektrochemischen Zellen in eine erfindungsgmäße Batterieaufnahmeeinheit mit den folgenden Verfahrensschritten: Ablegen der elektrochemischen Zelle auf einer Ablagefläche der Batterieaufnahmeeinheit, in Kontaktbringen eines Stromableiters der elektrochemischen Zelle mit einer Kontaktierungsfläche einer Kontaktschiene der Batterieaufnahmeeinheit, Verschieben der elektrochemischen Zelle entlang einer Einschubrichtung bis zu einer definierten Lagerposition, wobei der Stromableiter während des Verschiebens in vorzugsweise ständigem Kontakt mit der Kontaktierungsschiene ist. Geringfügige Unterbrechungen, insbesondere bedingt durch Unterbrechungen der Kontaktierungsschiene, sind dabei von der Formulierung "ständiger Kontakt" mitumfasst.

Vorzugsweise werden zumindest zwei oder mehrere elektrochemische Zellen zunächst auf einer Ablagefläche angeordnet und anschließend gemeinsam mit der Ablagefläche gegenüber der Kontaktierungsschiene, insbesondere entlang einer Längsachse der Kontaktierungsschiene, verschoben. Es ergeben sich die bezüglich der Vorrichtung genannten Vorteile und Weiterbildungsmöglichkeiten.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1:: eine Batteriestation,
a) in Frontansicht,
b) in Seitenansicht;
- Fig. 2:: Einzelheiten der Batteriestation aus Fig. 1a),
a) in Einzelheit in Seitenansicht,
b) in vergrößerter Darstellung in Seitenansicht;
- Fig. 3:: die Anordnung aus Fig. 2 in einer alternativen Ausführungsform in Seitenansicht;
- Fig. 4:: eine elektrochemische Zelle in einer ersten Ausführungsform
a) innerhalb einer Batterieaufnahmeeinheit in Frontansicht,
b) in Draufsicht;
- Fig. 5:: eine elektrochemische Zelle innerhalb einer Batterieaufnahmeeinheit
a) in einer zweiten Ausführungsform in Frontansicht,
b) in einer dritten Ausführungsform in Frontansicht,
c) in einer vierten Ausführungsform in Frontansicht,
d) in einer fünften Ausführungsform in Frontansicht;
- Fig. 6:: eine elektrochemische Zelle in einer sechsten Ausführungsform
a) innerhalb einer Batterieaufnahmeeinheit in Frontansicht,
b) in Draufsicht;
- Fig. 7:: eine elektrochemische Zelle innerhalb einer Batterieaufnahmeeinheit
a) in einer siebten Ausführungsform in Frontansicht,
b) in einer achten Ausführungsform in Frontansicht,
- Fig. 8:: die Kontaktierungsfläche umfassend mehrere gegeneinander isolierte Kontaktierungsflächenabschnitte in Seitenansicht;
- Fig. 9:: eine Bodenplatte mit darauf angeordneten sternförmig zueinander ausgerichteten Kontaktierungsschienenabschnitten und einer Drehscheibe in Draufsicht;
- Fig. 10:: eine Batteriestation umfassend mehrere beweglich zueinander angeordneten Batterieaufnahmeeinheiten in Seitenansicht.

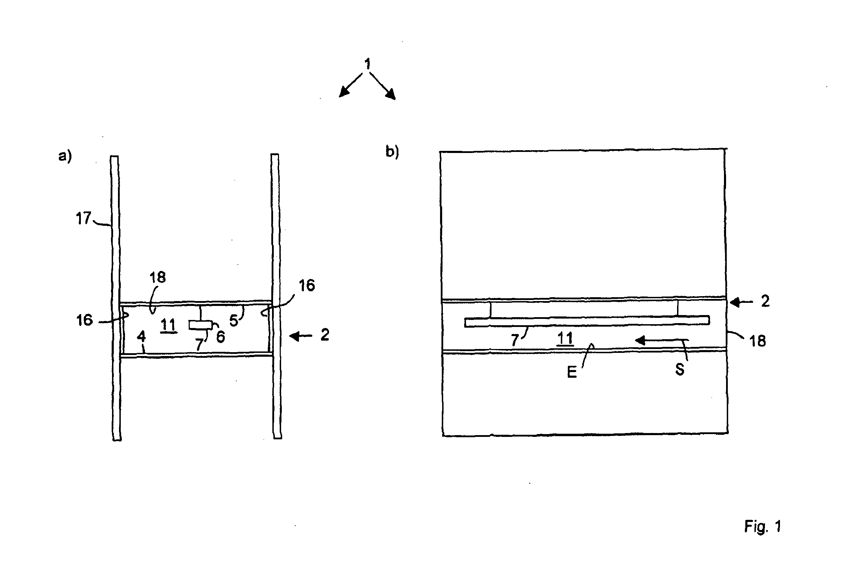

Figur 1 zeigt eine Batteriestation 1. Die Batteriestation 1 besitzt mehrere Batterieaufnahmeeinheiten 2, von denen nur eine Batterieaufnahmeeinheit 2 gezeigt ist. Weitere Batterieaufnahmeeinheiten 2 sind vertikal oberhalb und unterhalb der gezeigten Batterieaufnahmeeinheit 2 angeordnet. Die gezeigte Batterieaufnahmeeinheit 2 dient zur Aufnahme zumindest einer elektrochemischen Zelle 3, welche in der Figur 1 nicht dargestellt ist.

Die Batterieaufnahmeeinheit 2 weist eine Ablagefläche 4 auf, welche vertikal unten angeordnet ist, und eine Deckenfläche 5, welche vertikal oben angeordnet ist. Seitliche Wände 16 verbinden die Ablagefläche 4 und die Deckenfläche 5 ortsfest miteinander. Die gezeigte Batterieaufnahmeeinheit 2 sowie weitere nicht gezeigte Batterieaufnahmeeinheiten sind in einem nicht näher erläuterten Gehäuse 17 der Batteriestation 1 aufgenommen. Die Ablagefläche 4 ist in einer Ebene E angeordnet. Die Deckenfläche 5 ist parallel aber vertikal beabstandet zur Ebene E angeordnet.

Eine Kontaktierungseinheit 6 ist an der Deckenfläche 5 hängend aufgenommen und weist von der Deckenfläche 5 in Richtung zur Ablagefläche 4. Die Kontaktierungseinheit 6 weist eine Kontaktierungsschiene 7 auf, welche eine längliche Erstreckung aufweist und sich nahezu über die gesamte Länge der Ablagefläche bzw. der Deckenfläche 4, 5 erstreckt. Die Batterieaufnahmeeinheit 2 weist eine Einführöffnung 18 auf, durch die die nicht dargestellten elektrochemischen Zellen in einen Aufnahmeraum 11, der zwischen der Ablagefläche 4 und der Deckenfläche 5 gebildet ist, eingeschoben werden können. Die elektrochemischen Zellen werden dabei in Einschubrichtung S in den Aufnahmeraum 11 eingeführt.

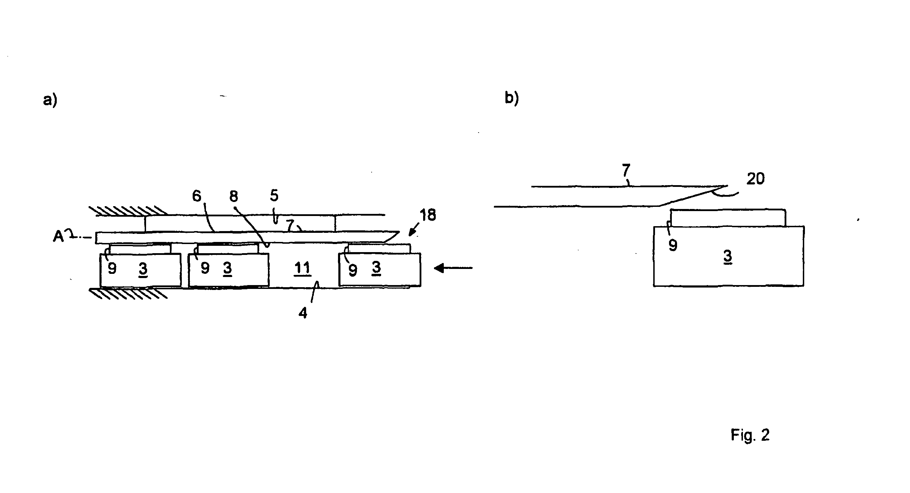

Figur 2a) zeigt den Vorgang des Einführens der elektrochemischen Zellen 3 in den Aufnahmeraum 11. Die elektrochemischen Zellen 3 werden durch die Einführöffnung 18 in den Aufnahmeraum 11 geführt. Dabei gleiten die elektrochemischen Zellen 3 auf der Ablagefläche 4 entlang einer Längsachse A der Kontaktierungsschiene 7. Die elektrochemischen Zellen 3 können an unterschiedlichen axialen Positionen mit der Kontaktierungseinheit 6 in Kontakt geraten. Die Kontaktierungsschiene 7 erstreckt sich dabei über einen axialen Weg, der ein Vielfaches der Erstreckung der elektrochemischen Zellen 3 in dieser Richtung, nämlich entlang der Längsachse A, entspricht. In Figur 2b) ist zu erkennen, dass die Kontaktierungsschiene 7 an dem der Einführöffnung 18 zugewandten Ende eine Abschrägung 20 aufweist, die zur verbesserten Führung des Stromableiters 9 beim Heranführen des Stromableiters an die Kontaktierungseinheit 6 dient.

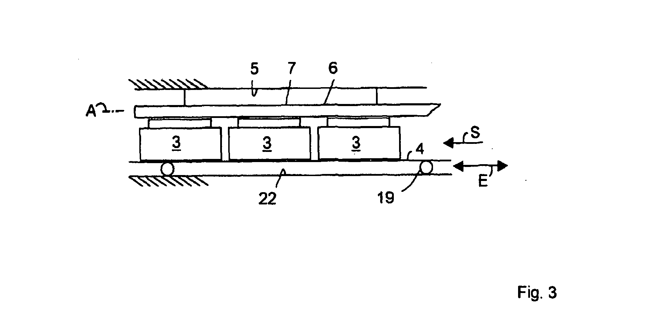

Figur 3 zeigt eine alternative Anordnung der Batteriestation 1. Im Unterschied zur Batteriestation nach Figur 2 ist die Ablagefläche 4 nicht ortsfest innerhalb der Batteriestation gehalten. Vielmehr ist die Kontaktierungseinheit 6 verschiebbar innerhalb der Ebene E entlang der Längsachse A der Kontaktierungsschiene 7 verschiebbar. Dazu ist eine Lagerung mit mehreren schematisch dargestellten Rollen 19 vorgesehen, mittels der die Ablagefläche 4 auf einer Bodenfläche 22 verschiebbar gehalten ist, welche ortsfest innerhalb der Batterieaufnahmeeinheit 2 gehalten ist. Diese Anordnung bietet den Vorteil, dass zunächst sämtliche auf einer Ablagefläche 4 anzuordnenden elektrochemischen Zellen 3 auf der Ablagefläche 4 abgelegt werden können. Anschließend erfolgt in einem weiteren Verfahrensschritt das Verschieben aller elektrochemischen Zellen 3 gemeinsam entlang der Kontaktierungsschiene 7 bis zu definierten Positionen, in denen die elektrochemischen Zellen 3 innerhalb der Batterieaufnahmeeinheit 2 für den Betrieb verbleiben. Die Einschubrichtung S, entlang derer die elektrochemischen Zellen in den Aufnahmeraum 11 verschoben werden, ist in den Figuren 2 und 3 gezeigten Ausgestaltungen parallel zur Längsachse A ausgerichtet.

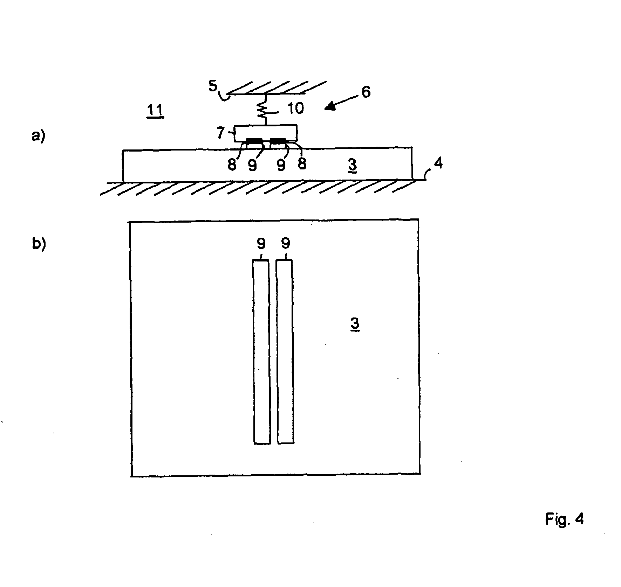

In Figur 4b) ist eine elektrochemische Zelle 3 in Draufsicht gezeigt. Es ist zu erkennen, dass zwei länglich ausgebildete Stromableiter 9 der elektrochemischen Zellen 3 parallel zueinander verlaufen, die aber auch deutlich kürzer ausgebildet sein können. In Figur 4a) ist die elektrochemische Zelle 3 innerhalb des Aufnahmeraums 11 in Frontansicht gezeigt. Die elektrochemische Zelle 3 liegt an der Ablagefläche 4 auf. Ferner ist die Kontaktierungseinheit 6 mit der Kontaktierungsschiene 7 zu erkennen. Die Kontaktierungsschiene 7 ist mittels Federmittel 10 von der Deckenfläche 5 in Richtung Ablagefläche 4 beaufschlagt. An einer Unterseite der Kontaktierungsschiene 7 sind zwei Kontaktierungsflächen 8 angeordnet, die sich in Längsrichtung der Kontaktierungsschiene 7 erstrecken. Die Kontaktierungsflächen 8 sind mit den Stromableitern 9 in unmittelbarem stromübertragendem Kontakt. Die Kontaktierungsschiene 7 hat einen im Wesentlichen rechteckigen Querschnitt. Die elektrochemische Zelle 3 ist kraftschlüssig innerhalb der Batterieaufnahmeeinheit 1 gehalten.

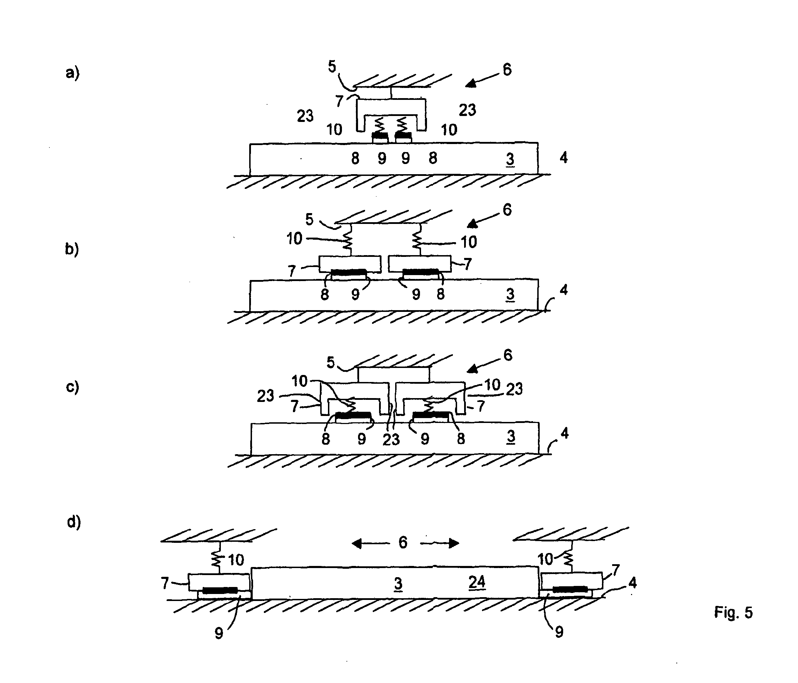

In Figur 5 sind alternative Ausführungsformen der Kontaktierungseinheit 6 dargestellt. Die in Figur 5a) dargestellte Kontaktierungseinheit 6 entspricht weitgehend der Kontaktierungseinheit 6 aus Figur 4. Abweichend hierzu ist die Kontaktierungsschiene 7 ortsfest gegenüber der Deckenfläche 5 gehalten. Die Kontaktierungsschiene 7 weist einen im Wesentlichen U-förmigen Querschnitt auf, wobei innerhalb des U-förmigen Querschnitts zwei Federmittel 10 vorgesehen sind, über die zwei Kontaktierungsflächen 8 in Richtung zur Ablagefläche 4 beaufschlagt werden können. Seitliche Wandungen 23 der Kontaktierungsschienen 7 können dabei die Federmittel 10 vor äußeren Einflüssen schützen. Die seitlichen Wandungen 23 können auch weiter in Richtung der Ablagefläche 4 ragen, sodass die seitlichen Wandungen 23 auch die Kontaktierungsflächen 8 überragen und dabei die Stromableiter seitlich führen können.

Die in Figur 5b) gezeigte Kontaktierungseinheit 6 entspricht weitgehend der in Figur 4 gezeigten Kontaktierungseinheit 6. Abweichend hierzu weist die Kontaktierungseinheit 6 zwei separate Kontaktierungsschienen 7 auf, die jeweils eine Kontaktierungsfläche 8 tragen.

Die in Figur 5c) gezeigte Kontaktierungseinheit 6 entspricht weitgehend der in Figur 5a) gezeigten Kontaktierungseinheit 6. Abweichend hierzu sind zwei separate Kontaktierungsschienen 7 vorgesehen, an der jeweils eine Kontaktierungsfläche 8 angebracht ist.

Die in Figur 5d) gezeigte Kontaktierungseinheit 6 entspricht weitgehend der in Figur 5b) gezeigten Kontaktierungseinheit 6. In Abweichung zur Vorrichtung gemäß der Figur 5b) sind die Stromableiter 9 der elektrochemischen Zelle 3 seitlich außen an gegenüberliegenden Seiten der elektrochemischen Zelle 3 angeordnet. Insofern sind auch die beiden Kontaktierungsschienen 7 der Kontaktierungseinheit 6 mit größerem Abstand zueinander angeordnet. Die Stromableiter 9 sind in Anlage mit den Ablageflächen 4. Eine Anpresskraft, die durch die Federmittel 10 auf die Stromableiter 9 aufgebracht wird, wird von den Stromableitern 9 unmittelbar auf die Ablagefläche 4 übertragen. Somit bleibt ein Grundkörper 24 der elektrochemischen Zelle 3, der die wesentlichen galvanischen Elemente der elektrochemischen Zelle 3 umfasst, weitgehend unbeaufschlagt von den Kräften der Federmittel 10.

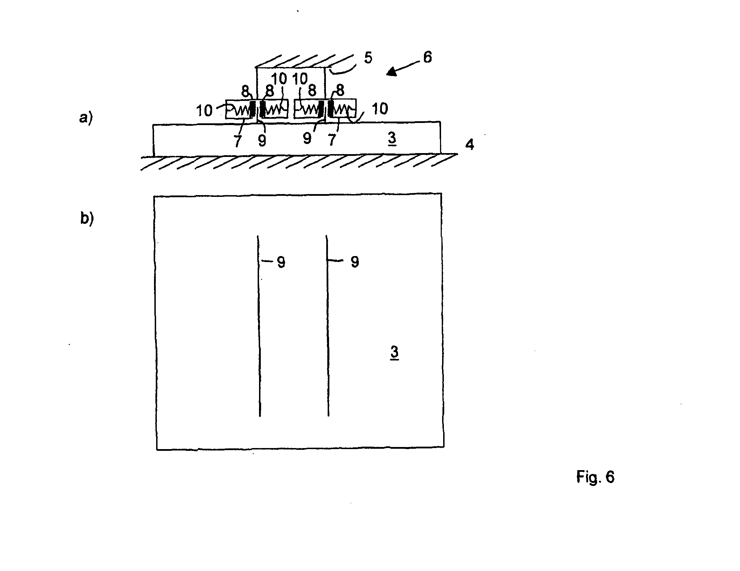

Figur 6 zeigt eine alternative Ausgestaltung der Kontaktierungseinheit 6, die weitgehend der Ausgestaltung gemäß Figur 5c) entspricht. Im Folgenden wird nur auf die Unterschiede eingegangen. Die in Figur 6 gezeigte Kontaktierungseinheit 6 ist geeignet für elektrochemische Zellen 3, welche Stromableiter 9 aufweisen, die quer aus einer Umhüllung der elektrochemischen Zelle 3 hervorragen. Kontaktierungsflächen 8 der Kontaktierungseinheit 6 geraten dabei mit den Stromableitern 9 entlang von Flächen in Kontakt, welche senkrecht zu der Ablagefläche 4 ausgerichtet sind. Es sind an einer axialen Stelle der Kontaktierungsschiene 6 somit zwei Kontaktierungsflächen 8 pro Kontaktierungsschiene 7 vorgesehen, zwischen welchen jeweils ein Stromableiter 9 gehalten ist. Der Stromableiter 9 kann von den Kontaktierungsflächen 8 kraftschlüssig gehalten sein. Die Kontaktierungsschienen 7 weisen dabei einen Hohlraum auf, in dem jeweils zwei Federmittel 10 angeordnet sind, welche die beiden Kontaktierungsflächen 8 gegeneinander beaufschlagen. Die Federmittel 10 können eine derart hohe Normalkraft auf die Kontaktierungsflächen und den Stromableitern 9 erzeugen, dass hierdurch die elektrochemische Zelle 3 ausreichend sicher gegen unbeabsichtigtes Verschieben aus der definierten Position gehalten werden kann. Die Kontaktierungsschienen 7 sind ortsfest gegenüber der Deckenfläche 5 gehalten.

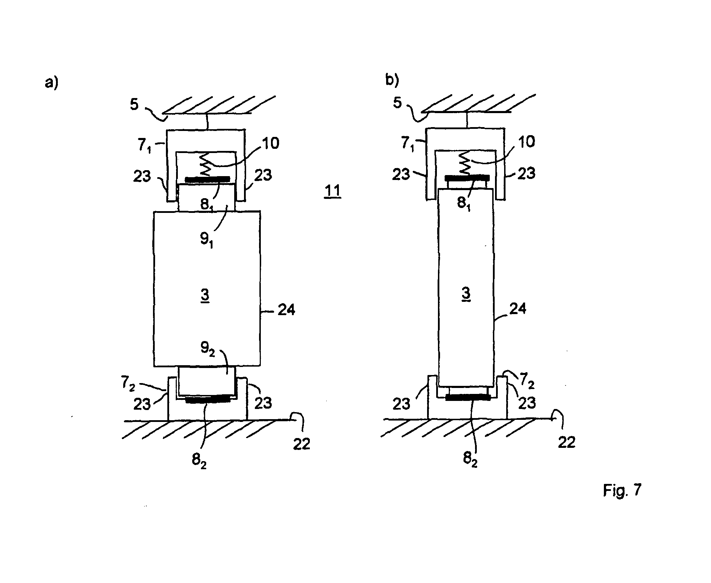

Die in Figur 7 gezeigten Anordnungen sind insbesondere geeignet für Rundzellen und entsprechen weitgehend der Anordnung gemäß Figur 5c). Im Folgenden wird nur auf die Unterschiede eingegangen. In Figur 7a) ist eine Rundzelle 3 zu erkennen, die mittels zweier Kontaktierungsschienen 7₁, 7₂ in dem Aufnahmeraum 11 gehalten ist. Die obere Kontaktierungsschiene 7₁ entspricht im Wesentlichen der Kontaktierungsschiene 7 nach Figur 5c). Die seitlichen Wandungen 23 der oberen Kontaktierungsschiene 7₁ ragen derart weit nach unten, dass der obere Stromableiter 9₁ seitlich durch die seitlichen Wandungen 23 geführt wird. Seitliche Wandungen 23 der unteren Kontaktierungsschiene 7₂ ragen derart weit nach oben, dass die unteren Stromableiter 9₂ durch die seitlichen Wandung 23 geführt sind. Die Ablagefläche, auf der die Rundzelle 3 abgelegt wird, wird durch die untere Kontaktierungsfläche 8₂ gebildet. Die untere Kontaktierungsfläche 8₂ stützt sich auf der Bodenfläche 22 der Batterieaufnahmeeinheit 2 ab.

Die Figur 7b) zeigt eine alternative Ausgestaltung der Batterieaufnahmeeinheit gemäß Figur 7a), wobei nur auf die Unterschiede eingegangen wird. Dabei ragen die seitlichen Wandungen 23 der oberen und unteren Kontaktierungsschienen derart weit in Richtung der jeweils anderen Kontaktierungsschiene 7₁, 7₂, dass die seitlichen Wandungen 23 einen Grundkörper 24 der elektrochemischen Zelle seitlich stützen können.

Für beide in Figur 7 gezeigten Vorrichtungen ist es möglich, dass die Federmittel 10 auch an einer anderen Stelle angeordnet sind. So können insbesondere auch die Kontaktierungsflächen 8 der oberen Kontaktierungseinheiten 6 fest mit der oberen Kontaktierungsschiene 7₁ verbunden sein. Dabei können die Federmittel 10 zwischen der Kontaktierungsschiene 7 und der Deckenfläche 5 angeordnet sein. Ferner können die Federmittel auch an der unteren Kontaktierungsschiene 7₂ angebracht sein.

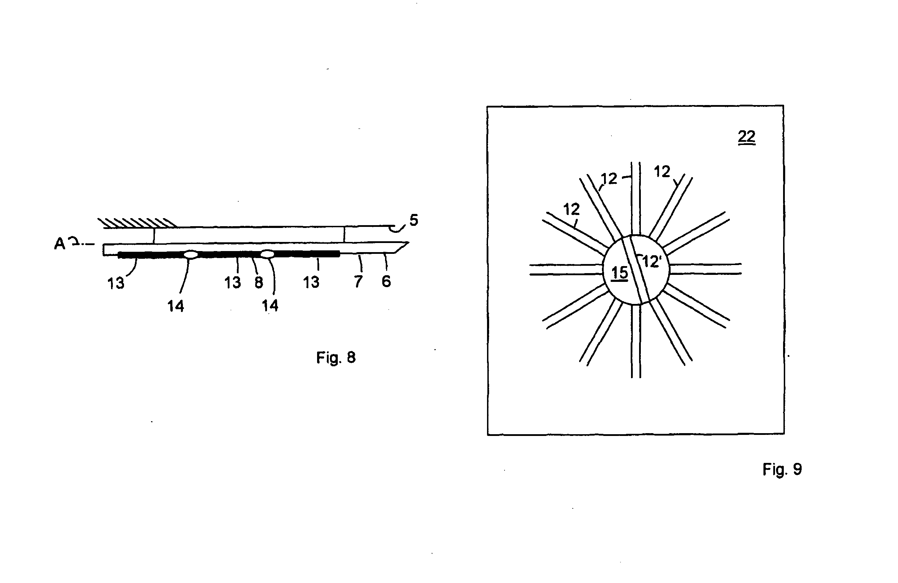

Figur 8 zeigt eine erfindungsgmäße Ausgestaltung der Kontaktierungseinheit 6, welche insbesondere auch anwendbar zu den unterschiedlichen Ausgestaltungen der vorherigen Figuren ist. Eine Kontaktierungsfläche 8, welche einer Kontaktierungsschiene 7 zugeordnet ist, weist mehrere axial hintereinander angeordnete Kontaktierungsflächenabschnitte 13 auf, welche entlang einer gemeinsamen Längsachse A angeordnet sind. Zwischen einzelnen Kontaktierungsflächenabschnitten 13 sind lsolierabschnitte 14 vorgesehen, sodass einzelne Kontaktierungsflächenabschnitte nicht in elektrisch leitendem Kontakt stehen müssen, auch wenn sie benachbart zueinander angeordnet sind.

Hierdurch wird eine flexible Verschaltung von unterschiedlichen Kontaktierungsflächenabschnitten möglich, wodurch wiederum eine flexible Verschaltung der mit den Kontaktierungsflächenabschnitten in Kontakt stehenden elektrochemischen Zellen möglich wird.

Figur 9 zeigt Details einer Weiterbildung einer erfindungsgemäßen Batterieaufnahmeeinheit. Dabei sind in Draufsicht auf eine Bodenfläche 22 mehrere sternförmig zueinander angeordnete Kontaktierungsschienenabschnitte 12 zu erkennen. Mittig zu den sternförmig angeordneten Kontaktierungsschienenabschnitten 12 ist eine Drehscheibe 15 angeordnet, welche einen separaten Kontaktierungsschienenabschnitt 12' aufweist, der durch einen Mittelpunkt der kreisförmigen Drehscheibe 15 verläuft. Eine entsprechende gegengleiche Anordnung ist auf der Deckenfläche 5 vorgesehen. Die Kontaktierungsschienenabschnitte 12 können, im Querschnitt betrachtet, insbesondere ausgestaltet sein wie in den Figuren 7a) und b) gezeigt. Über einen Kontaktierungsflächenabschnitt 13 kann eine elektrochemische Zelle zur Drehscheibe 15 hingefördert werden oder von der Drehscheibe 15 weggefördert werden. Die Drehscheibe 15 ermöglicht dabei das Umsetzen von einer elektrochemischen Zelle 3 von einem Kontaktierungsschienenabschnitt 12 zu einem anderen, insbesondere winklig angeordneten, Kontaktierungsschienenabschnitt 12. Insgesamt wird durch diese Anordnung ein Rangieren von elektrochemischen Zellen 3 innerhalb der Batterieaufnahmeeinheit 2 ermöglicht. Dies ist insbesondere bei automatisierten Batteriestationen von Vorteil, wenn einzelne elektrochemische Zellen 3 ausgetauscht werden müssen.

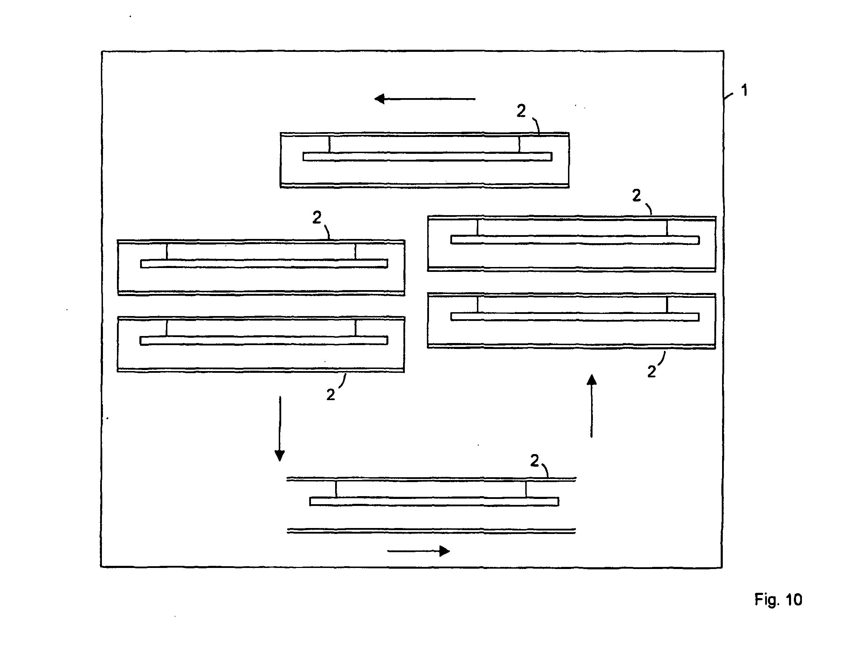

Figur 10 zeigt eine Batteriestation 1 in einer weiteren Ausführungsform. Die Batteriestation 1 umfasst mehrere Batterieaufnahmeeinheiten 2 der oben genannten Art. Alternativ zur Batteriestation 1, welche in Figur 1 gezeigt ist, sind die einzelnen Batterieaufnahmeeinheiten 2 beweglich innerhalb der Batteriestation 1 gehalten. Insbesondere können die Batterieaufnahmeeinheiten 2 rotierend bewegt werden, ähnlich wie bei einem Paternosteraufzug. Die bezüglich den Figuren 2 bis 9 gezeigten Ausgestaltungen können bei dieser Batteriestation auch Anwendung finden.

### Bezugszeichenliste

- 1: Batteriestation
- 2: Batterieaufnahmeeinheit
- 3: Elektrochemische Zelle
- 4: Ablagefläche
- 5: Deckenfläche
- 6: Kontaktierungseinheit
- 7: Kontaktierungsschiene
- 8: Kontaktierungsfläche
- 9: Stromableiter
- 10: Federmittel
- 11: Aufnahmeraum
- 12: Kontaktierungsschienenabschnitt
- 13: Kontaktierungsflächenabschnitt
- 14: Isolierabschnitt
- 15: Drehscheibe
- 16: seitliche Wände
- 17: Gehäuse
- 18: Einführöffnung
- 19: Rollen
- 20: Abschrägung
- 22: Bodenfläche
- 23: seitliche Wandungen
- 24: Grundkörper

- A: Längsachse
- E: Ebene
- S: Einschubrichtung

## Patentansprüche

1. Batterieaufnahmeeinheit (2) zur Aufnahme zumindest einer elektrochemischen Zelle (3), mit einer Ablagefläche (4) zum Ablegen einer elektrochemischen Zelle (3) und einer Kontaktierungseinheit (6) mit einer Kontaktierungsfläche (8), wobei die Kontaktierungsfläche mit einem Stromableiter (9) der elektrochemischen Zelle (3) in Anlage bringbar ist, und wobei die Batterieaufnahmeeinheit (2) Rangiermittel aufweist, die eine Drehscheibe (15) umfassen, **dadurch gekennzeichnet, dass** die Kontaktierungseinheit (6) zumindest eine Kontaktierungsschiene (7) mit einer Mehrzahl von Kontaktierungsschienenabschnitten (12) aufweist, an der zumindest eine Kontaktierungsfläche (8) angeordnet ist, die mehrere entlang einer gemeinsamen Längsachse (A) angeordnete Kontaktierungsflächenabschnitte (13) aufweist, wobei einzelne Kontaktierungsflächenabschnitte (13) gegeneinander elektrisch isoliert sind, und dass die Drehscheibe (15) mittig gegenüber einer Mehrzahl von sternförmig zueinander angeordneten Kontaktierungsschienenabschnitten (12) angeordnet ist.

2. Batterieaufnahmeeinheit nach Anspruch 1,
**dadurch gekennzeichnet, dass** zwischen einzelnen Kontaktierungsflächenabschnitte (13) Isolierabschnitte (14) vorgesehen sind.

3. Batterieaufnahmeeinheit nach zumindest einem der vorhergehenden Ansprüche,
**dadurch gekennzeichnet, dass**
Federmittel (10) vorgesehen sind, die die Kontaktierungsfläche (8) beaufschlagen.

4. Batterieaufnahmeeinheit nach zumindest einem der vorhergehenden Ansprüche,
**dadurch gekennzeichnet, dass**
die Kontaktierungsschiene (7) entlang einer Längsachse (A) der Kontaktierungsschiene (7) eine größere Erstreckung aufweist als eine einzusetzende elektrochemische Zelle (3).

5. Batterieaufnahmeeinheit nach zumindest einem der vorhergehenden Ansprüche,
**dadurch gekennzeichnet, dass**
die Kontaktierungsschiene (7) einen geradlinigen Verlauf aufweist.

6. Batterieaufnahmeeinheit nach zumindest einem der vorhergehenden Ansprüche,
**dadurch gekennzeichnet, dass**
eine Kontaktierungsschiene (7) beabstandet zur Ablagefläche (4) angeordnet ist.

7. Batterieaufnahmeeinheit nach zumindest einem der vorhergehenden Ansprüche,
**dadurch gekennzeichnet, dass**
eine Kontaktierungsschiene (7) die Ablagefläche (4) bildet.

8. Batterieaufnahmeeinheit nach zumindest einem der vorhergehenden Ansprüche,
**dadurch gekennzeichnet, dass**
die Ablagefläche (4) in einer Ebene (E) angeordnet ist und die Kontaktierungsschiene (7) parallel zu dieser Ebene (E) ausgerichtet ist.

9. Batterieaufnahmeneinheit nach zumindest einem der vorhergehenden Ansprüche,
**dadurch gekennzeichnet, dass**
die Kontaktierungsschiene (7) Mittel zum seitlichen Führen (23) einer elektrochemischen Zelle (3) aufweist.

10. Batterieaufnahmeeinheit nach zumindest einem der vorhergehenden Ansprüche,
**dadurch gekennzeichnet, dass**
eine Kontaktierungsfläche (8) mehrere flexibel verschaltbare Kontaktierungsflächenabschnitte (13) aufweist, wobei einzelne Kontaktierungsflächenabschnitte (13) gegeneinander elektrisch isoliert sind.

11. Batterieaufnahmeeinheit nach zumindest einem der vorhergehenden Ansprüche,
**dadurch gekennzeichnet, dass**
die Ablagefläche (4) verschiebbar innerhalb der Batterieaufnahmeeinheit (2) gehalten ist, insbesondere verschiebbar gegenüber einer Längsachse (A) der Kontaktierungsschiene (7) gehalten ist.

12. Batteriestation (1) oder Formierungsanlage oder Batterieladeeinrichtung, mit zumindest einer Batterieaufnahmeeinheit (2) nach zumindest einem der Ansprüche 1 bis 11.

13. Verfahren zum Einlegen von elektrochemischen Zellen (3) in eine Batterieaufnahmeeinheit (2) nach einem der Ansprüche 1 bis 11 oder in eine Batteriestation nach Anspruch 12, mit den folgenden Schritten:
Ablegen der elektrochemischen Zelle (3) auf einer Ablagefläche (4) der Batterieaufnahmeeinheit (2),
In-Kontakt-Bringen eines Stromableiters (9) der elektrochemischen Zelle (3) mit einer Kontaktierungsfläche (8) einer Kontaktschiene (7) der Batterieaufnahmeeinheit (2), und
Verschieben der elektrochemischen Zelle (3) entlang einer Einschubrichtung (S) bis zu einer definierten Lagerposition, wobei der Stromableiter (9) während des Verschiebens in ständigem Kontakt mit der Kontaktierungsschiene (7) ist.

14. Verfahren nach Anspruch 13,
**dadurch gekennzeichnet, dass**
zumindest zwei elektrochemische Zellen (3) zunächst auf einer Ablagefläche (4) angeordnet werden und anschließend gemeinsam mit der Ablagefläche (4) gegenüber der Kontaktierungsschiene (7), insbesondere entlang einer Längsachse der Kontaktierungsschiene (A), verschoben werden.

## Claims

1. A battery receiving unit (2) for receiving at least one electrochemical cell (3) comprising a support surface (4) for the depositing of an electrochemical cell (3) and a contacting unit (6) having a contact surface (8), wherein the contact surface can be adjoined against a current collector (9) of the electrochemical cell (3), and wherein the battery receiving unit (2) has distributing means comprising a rotary disk (15) **characterized in that** the contacting unit (6) comprises at least one contact rail (7) having a plurality of contact rail sections (12) on which at least one contact surface (8) is arranged which comprises a plurality of contact surface sections (13) arranged along a common longitudinal axis (A), wherein individual contact surface sections (13) are electrically insulated from one another, and that the rotary disk (15) is arranged centrally with respect to a plurality of adjacently arranged radial contact rail sections (12).

2. The battery receiving unit according to claim 1,
**characterized in that** insulating sections (14) are provided between individual contact surface sections (13).

3. The battery receiving unit according to at least one of the preceding claims,
**characterized in that**
spring means (10) are provided to load the contact surface (8).

4. The battery receiving unit according to at least one of the preceding claims,
**characterized in that**
the contact rail (7) has a greater extension along a longitudinal axis (A) of the contact rail (7) than an electrochemical cell (3) to be inserted.

5. The battery receiving unit according to at least one of the preceding claims,
**characterized in that**
the contact rail (7) exhibits a linear progression.

6. The battery receiving unit according to at least one of the preceding claims,
**characterized in that**
a contact rail (7) is arranged at a distance from the support surface (4).

7. The battery receiving unit according to at least one of the preceding claims,
**characterized in that**
a contact rail (7) forms the support surface (4).

8. The battery receiving unit according to at least one of the preceding claims,
**characterized in that**
the support surface (4) is arranged in one plane (E) and the contact rail (7) is aligned parallel to said plane (E).

9. The battery receiving unit according to at least one of the preceding claims,
**characterized in that**
the contact rail (7) comprises means for the lateral guiding (23) of an electrochemical cell (3).

10. The battery receiving unit according to at least one of the preceding claims,
**characterized in that**
the contact surface (8) comprises a plurality of flexibly interconnectable contact surface sections (13), wherein individual contact surface sections (13) are electrically insulated from one another.

11. The battery receiving unit according to at least one of the preceding claims,
**characterized in that**
the support surface (4) is displaceably retained within the battery receiving unit (2), in particular displaceably retained relative to a longitudinal axis (A) of the contact rail (7).

12. A battery station (1) or formation apparatus or battery charging device comprising at least one battery receiving unit (2) according to at least one of claims 1 to 11.

13. A method for inserting electrochemical cells (3) into a battery receiving unit (2) according to one of claims 1 to 11 or in a battery station according to claim 12 comprising the following steps:
depositing the electrochemical cell (3) on a support surface (4) of the battery receiving unit (2),
bringing a current collector (9) of the electrochemical cell (3) into contact with a contact surface (8) of a contact rail (7) of the battery receiving unit (2) and
displacing the electrochemical cell (3) along a direction of insertion (S) up to a defined deposit position, wherein the current collector (9) is in continuous contact with the contact rail (7) during the displacement.

14. The method according to claim 13,
**characterized in that**
at least two electrochemical cells (3) are initially arranged on a support surface (4) and are then displaced together with the support surface (4) relative to the contact rail (7), in particular along a longitudinal axis (A) of the contact rail (7).

## Revendications

1. Unité de logement de batterie (2) pour la réception d'au moins une cellule électrochimique (3), avec une surface de réception (4) destinée à accueillir une cellule électrochimique (3) et une unité de mise en contact (6) avec une surface de mise en contact (8), la surface de mise en contact pouvant être connectée à un conducteur de courant (9) de la cellule électrochimique (3), et l'unité de logement de batterie (2) présentant des systèmes de manoeuvre qui comprennent un plateau rotatif (15), **caractérisée en ce que** l'unité de mise en contact (6) présente au moins un rail de mise en contact (7) avec une pluralité de sections de rail de mise en contact (12), au niveau de laquelle est disposée au moins une surface de mise en contact (8) qui présente plusieurs sections de surface de mise en contact (13) mises en place le long d'un axe longitudinal commun (A), plusieurs sections individuelles de surface de mise en contact (13) étant isolées électriquement les unes des autres, et **en ce que** le plateau rotatif (15) est disposé au centre par rapport aux à une pluralité de sections de rail de mise en contact (12), disposées en étoile les unes par rapport aux autres.

2. Unité de logement de batterie selon la revendication 1,
**caractérisée en ce que** des sections isolantes (14) sont prévues entre les diverses sections de surface de mise en contact (13).

3. Unité de logement de batterie selon au moins une des revendications précédentes,
**caractérisée en ce que**
sont prévus des moyens formant ressort (10) qui alimentent la surface de mise en contact (8).

4. Unité de logement de batterie selon au moins une des revendications précédentes,
**caractérisée en ce que**
le rail de mise en contact (7) présente, le long d'un axe longitudinal (A) du rail de mise en contact (7), une étendue plus grande qu'une cellule électrochimique (3) devant être insérée.

5. Unité de logement de batterie selon au moins une des revendications précédentes,
**caractérisée en ce que**
le rail de mise en contact (7) présente un profil rectiligne.

6. Unité de logement de batterie selon au moins une des revendications précédentes,
**caractérisée en ce que**
un rail de mise en contact (7) est disposé à distance de la surface de réception (4).

7. Unité de logement de batterie selon au moins une des revendications précédentes,
**caractérisée en ce que**
un rail de mise en contact (7) forme la surface de réception (4).

8. Unité de logement de batterie selon au moins une des revendications précédentes,
**caractérisée en ce que**
la surface de réception (4) est disposée sur un plan (E) et le rail de mise en contact (7) est aligné en parallèle à ce niveau (E).

9. Unité de logement de batterie selon au moins une des revendications précédentes,
**caractérisée en ce que**
le rail de mise en contact (7) présente un moyen destiné au guidage latéral (23) d'une cellule électrochimique (3).

10. Unité de logement de batterie selon au moins une des revendications précédentes,
**caractérisée en ce que**
une surface de mise en contact (8) présente plusieurs sections flexibles de surface de mise en contact (13) pouvant être connectées, les diverses sections de surface de mise en contact (13) étant isolées électriquement les unes des autres.

11. Unité de logement de batterie selon au moins une des revendications précédentes,
**caractérisée en ce que**
la surface de réception (4) est maintenue de manière à pouvoir coulisser à l'intérieur de l'unité de logement de batterie, en particulier est maintenue de manière à pouvoir coulisser par rapport à un axe longitudinal (A) du rail de mise en contact (7).

12. Poste à batterie (1) ou installation de formation ou dispositif de charge de batterie, avec au moins une unité de logement de batterie (2) selon au moins une des revendications 1 à 11.

13. Procédé destiné à insérer des cellules électrochimiques (3) dans une unité de logement de batterie (2) selon une des revendications 1 à 11 ou dans un poste à batterie selon la revendication 12, selon les étapes suivantes :
réception de la cellule électrochimique (3) sur une surface de réception (4) de l'unité de logement de batterie (2),
mise en contact d'un conducteur de courants (9) de la cellule électrochimique (3) avec une surface de mise en contact (8) d'un rail de contact (7) de l'unité de logement de batterie (2), et
coulissement de la cellule électrochimique (3) le long d'une direction d'insertion (S) jusqu'à une position de stockage définie, le conducteur de courant (9) étant en contact continuel avec le rail de mise en contact (7) pendant le coulissement.

14. Procédé selon la revendication 13,
**caractérisé en ce que**
au moins deux cellules électrochimiques (3) sont d'abord disposées sur une surface de réception (4), puis sont coulissées ensemble avec la surface de réception (4) à l'opposé du rail de mise en contact (7), en particulier le long d'un axe longitudinal (A) du rail de mise en contact (7).
